(19) Europäisches Patentamt
European Patent Office
Office européen des brevets

(11) **EP 2 817 589 B1**

(12) **FASCICULE DE BREVET EUROPEEN**

(45) Date de publication et mention
de la délivrance du brevet:
**08.11.2017 Bulletin 2017/45**

(21) Numéro de dépôt: **13704615.7**

(22) Date de dépôt: **19.02.2013**

(51) Int Cl.:
**G01C 9/06** *(2006.01)*     **G01C 9/14** *(2006.01)*
**G01V 1/00** *(2006.01)*

(86) Numéro de dépôt international:
**PCT/EP2013/053251**

(87) Numéro de publication internationale:
**WO 2013/124261 (29.08.2013 Gazette 2013/35)**

(54) **INCLINOMÈTRE**

NEIGUNGSMESSER

INCLINOMETER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.02.2012 FR 1251622**

(43) Date de publication de la demande:
**31.12.2014 Bulletin 2015/01**

(73) Titulaires:
• **Centre National de la Recherche Scientifique
75016 Paris (FR)**
• **Université Montpellier 2 Sciences et Techniques
34095 Montpellier Cedex 5 (FR)**

(72) Inventeurs:
• **CHERY, Jean
F-34980 St Clément de Rivière (FR)**
• **COLLARD, Philippe
F-34090 Montpellier (FR)**

(74) Mandataire: **Ipside
6, Impasse Michel Labrousse
31100 Toulouse (FR)**

(56) Documents cités:
**WO-A1-90/10193       US-A- 4 949 467
US-A1- 2005 007 125**

**Description**

La présente invention concerne un inclinomètre, c'est-à-dire un dispositif destiné à mesurer des variations d'inclinaison de structures. L'invention est notamment utilisable dans les forages, dans le domaine du génie civil, pour la surveillance d'ouvrages d'art et de bâtiments, et globalement partout où un contrôle précis de la stabilité d'une structure est requis, particulièrement sur le long terme.

Les mesures de variation d'inclinaison de structures sont fréquentes et notamment réalisées dans le cas de mesure de déformations géophysiques, plus spécifiquement de déformations sismiques. De telles mesures sont également effectuées pour prévenir un éventuel danger d'effondrement de bâtiments ou d'une partie de ceux-ci, ou encore pour suivre l'évolution du stockage de fluides dans des sites de stockage géologique et la migration de ces fluides dans la couche perméable.

Lors d'un séisme, dans les zones de failles, le mouvement des failles géologiques survient de façon rapide. La détection de ces mouvements est aisée. Entre deux séismes, les déformations existent mais sont très faibles et très lentes. Or ces déformations sont couplées avec l'activité sismique et la détection de ces déformations est indispensable pour comprendre le mécanisme des failles dans la croute terrestre. Il doit donc être fait appel à des instruments de mesure très précis et fiables sur le long terme.

Il existe à l'heure actuelle très peu de dispositifs commercialisés capables de réaliser la mesure sur le long terme de ces déformations faibles. Les dispositifs actuels connus sont généralement des inclinomètres à bulle, tels que par exemple l'inclinomètre de forage Lily d'Applied Geomechanics (marque déposée), qui permettent la mesure de ces déformations à partir de la mesure de variations d'inclinaison dans des forages creusés dans la croute terrestre. Des inclinomètres pour la mesure d'une variation d'inclinaison d'une structure depuis une position initiale donnée, comportant un bâti, un pendule librement suspendu au bâti et des dispositifs de mesure de distance situés au niveau du bâti, sont connus des documents US4949467, US2005/0007125 A1 et WO90/10193.

La présente invention propose un dispositif nouveau permettant de mesurer précisément des variations d'inclinaison d'une structure.

Un objectif de la présente invention est de fournir un dispositif adapté à des mesures de variations d'inclinaison dans le temps répondant à des contraintes de taille, de performance et de coût rendant son utilisation réaliste en milieu industriel.

Ces objectifs, ainsi que d'autres qui apparaîtront par la suite, sont atteints selon l'invention grâce à un inclinomètre pour la mesure d'une variation d'inclinaison d'une structure depuis une position initiale donnée, comportant :

- un bâti destiné à être rendu rigidement et fixement solidaire de la structure afin que l'inclinaison du bâti varie identiquement à la structure, et
- un pendule librement suspendu au bâti, comportant une première extrémité fixée au bâti et une extrémité opposée libre en mouvement.

L'inclinomètre comporte, au niveau du bâti, au moins trois dispositifs de mesure de distance disposés de sorte à présenter, dans un plan, des axes de mesure respectifs coplanaires et concourants en un seul et même point, chaque dispositif de mesure mesurant une variation de distance le séparant du pendule. Afin de minimiser la dérive du système de mesure, les dispositifs de mesure de distance sont des dispositifs à fibres optiques couplés à une source lumineuse commune.

L'inclinomètre est basé sur la mesure du mouvement du pendule soumis à la gravité terrestre, c'est à dire qui tend à rester orienté verticalement. On entendra par « verticalement », la direction sensiblement parallèle à la force de gravitation. De même, on entendra par « horizontalement », la direction sensiblement perpendiculaire à la force de gravitation.

Lorsque la structure se déforme, elle entraîne une variation d'inclinaison par rapport à la position initiale du bâti qui lui est rigidement solidaire tandis que le pendule, lui, reste vertical. Le mouvement relatif entre le bâti dans la position initiale et le pendule permet avantageusement de mesurer la variation d'inclinaison de la structure.

La mesure du déplacement du pendule par rapport au bâti dans au moins trois directions distinctes coplanaires, obtenues par les mesures de distance acquises par les dispositifs de mesure, permet de reconstituer de façon précise l'inclinaison du bâti par rapport au pendule.

L'inclinomètre est avantageusement destiné à la mesure de déformations géophysiques, des réservoirs de stockage géologique et pour des applications de génie civil (déformation d'ouvrage de génie civil) pour lesquelles un contrôle précis de la stabilité d'une structure est requis, particulièrement sur le long terme.

Suivant des modes de réalisation préférés, l'invention répond en outre aux caractéristiques suivantes, mises en oeuvre séparément ou en chacune de leurs combinaisons techniquement opérantes.

Dans des modes de réalisation préférés de l'invention, le plan, dit de mesure, dans lequel sont situés les axes de mesure des dispositifs de mesure est un plan perpendiculaire à un axe, dit de référence, correspondant à un axe de symétrie du pendule lorsque le bâti est dans la position initiale.

Selon une caractéristique avantageuse de l'invention, afin d'améliorer la précision sur la mesure des distances, les dispositifs de mesure de distance sont disposés sensiblement au niveau de l'extrémité libre du pendule.

De manière tout à fait avantageuse, les axes de mesure des dispositifs de mesure de distance respectifs coplanaires sont non colinéaires deux à deux.

Dans des modes de réalisation préférés de l'invention, pour optimiser les calculs de mesure du déplacement du pendule dans le plan de mesure, l'inclinomètre comporte trois dispositifs de mesure disposés sur le bâti de sorte à présenter trois axes de mesure respectifs coplanaires formant entre eux un angle sensiblement égal à 120°.

L'invention est également relative à un système de mesure comportant un inclinomètre tel qu'exposé précédemment dans au moins l'un de ses modes de réalisation et des moyens de détermination de la variation d'inclinaison du bâti à partir des valeurs relevées par les dispositifs de mesure de distance.

La redondance des données mesurées via les au moins trois dispositifs de mesures permet entre autre une estimation intrinsèque du système de mesure et une compensation des dérives de celui-ci.

L'invention est également relative à l'utilisation du système de mesure à la mesure de déformations géophysiques.

Les caractéristiques et avantages de l'invention seront mieux appréciés grâce à la description qui suit, description qui expose les caractéristiques de l'invention au travers d'un exemple non limitatif d'application.

La description s'appuie sur les figures annexées dans lesquelles :

la figure 1 illustre schématiquement le principe d'un mode de réalisation particulier de l'inclinomètre objet de l'invention placé dans un forage, pour une position initiale donnée,

la figure 2 illustre schématiquement le principe d'un mode de réalisation particulier de l'inclinomètre objet de l'invention placé dans un forage, pour une position inclinée obtenue suite à une déformation du milieu environnant,

la figure 3 est une vue en coupe de la figure 1, dans un plan de mesure, et illustre schématiquement un exemple de positionnement de trois dispositifs de mesure de distance de l'inclinomètre,

la figure 4 présente un agrandissement d'une partie de la figure 3.

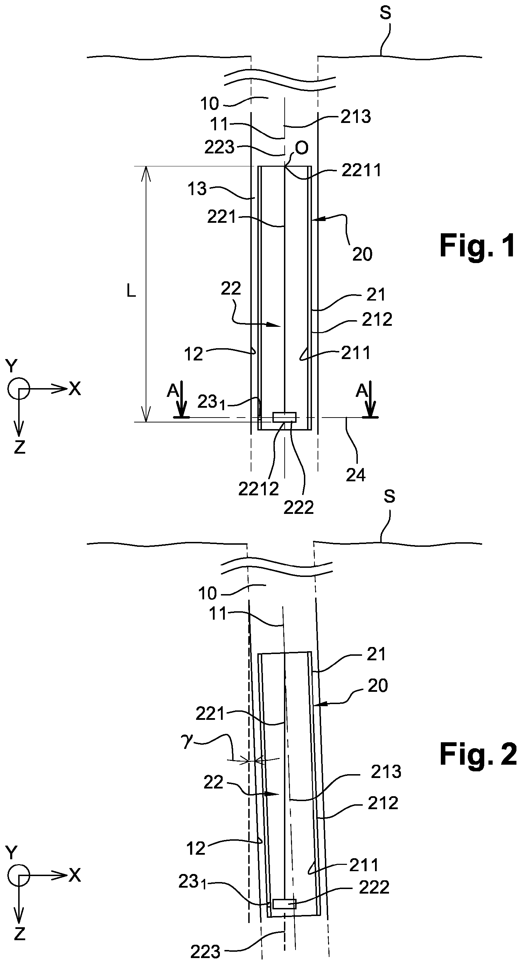

Un exemple de système de mesure, conforme à l'invention, de variation d'inclinaison d'une structure comporte un inclinomètre 20 schématiquement représenté sur la figure 1.

Dans l'exemple présenté, cette structure est la croute terrestre dans lequel un forage vertical 10 profond a été percé et dans lequel est introduit l'inclinomètre 20. L'exemple de réalisation de l'inclinomètre est décrit de manière détaillée dans son application au cas d'une mesure de variation d'inclinaison du forage pour des applications sismologiques. Ce choix n'est pas limitatif et l'invention s'applique également à d'autres applications, tels que par exemple dans le domaine du génie civil.

Dans toute la suite de la description, sauf mention contraire, au niveau du trou de forage réalisé à partir d'un sol S, on définira les termes horizontal et vertical, en référence à la gravité terrestre. Le terme « vertical » désigne donc une direction sensiblement parallèle à un vecteur d'accélération de la gravité terrestre, tandis que le terme « horizontal » désigne une direction sensiblement perpendiculaire à la verticale ainsi définie. L'axe vertical est représenté par l'axe Z d'un repère orthonormé XYZ dans l'espace illustré sur la figure 1. Les termes « haut », « bas », « supérieur » et « inférieur » font référence à la direction verticale Z du repère XYZ. Ainsi, les termes « haut » et « supérieur » désignent une direction dirigée vers le sol S, tandis que les termes« bas » et « inférieur » désignent une direction de sens opposé.

Le trou de forage 10 est préférentiellement de forme cylindrique, d'axe de symétrie longitudinal 11, et présente un diamètre typique de l'ordre de 7 à 13 cm, généralement 10 cm.

Le trou de forage 10 peut atteindre une profondeur typique de plusieurs milliers de mètres par rapport au sol S.

Dans l'exemple de la figure 1, le trou de forage 10 est vertical, c'est-à-dire avec un axe de symétrie longitudinal 11 présentant un angle d'inclinaison nul par rapport à l'axe vertical Z. Cette position verticale où l'axe de symétrie longitudinal 11 présente un angle d'inclinaison nul par rapport à l'axe vertical Z définit par la suite une position initiale donnée du trou de forage.

Dans l'exemple de la figure 2, l'axe de symétrie longitudinal 11 du trou de forage 10 est incliné d'un angle non nul γ par rapport à l'axe vertical Z, suite à une déformation de la croute terrestre, ci-après dite milieu environnant.

L'inclinomètre 20 comporte un bâti 21 longitudinal creux rigide, c'est-à-dire présentant une déformation négligeable lors de son implantation dans le forage 10, comportant une paroi longitudinale interne 211 et une paroi longitudinale externe 212. Ladite paroi longitudinale externe est destinée à être en vis-à-vis d'une paroi interne 12 du trou de forage 10 lorsque l'inclinomètre 20 est introduit dans ledit trou de forage, comme illustré sur les figures 1 et 2.

Le bâti 21 est avantageusement fermé à des extrémités hautes et basses de sorte à le rendre étanche à l'air et aux fluides.

Dans un exemple préféré de réalisation, le bâti 21 présente une forme cylindrique pour correspondre à la forme cylindrique du trou de forage, et de diamètre inférieur au diamètre du trou de forage de sorte à pouvoir être inséré sans difficulté dans le trou de forage.

Dans un exemple de réalisation, le bâti présente une longueur de 1 m et un diamètre de 8 cm.

Le bâti 21 présente un axe de symétrie longitudinal 213 sensiblement parallèle, de préférence identique, à l'axe de symétrie longitudinal 11 du trou de forage 10, lorsque l'inclinomètre est en position fixe dans le trou de forage 10, c'est-à-dire lorsque l'inclinomètre est rendu solidaire fixement du trou de forage.

Le bâti 21 de l'inclinomètre 20 est destiné à être installé dans le trou de forage à plusieurs centaines ou milliers de mètre du sol S. Les températures y étant plus importantes qu'au niveau du sol S, (il est connu de l'homme du métier que la température, à mesure que l'on s'éloigne du sol S, s'élève de sensiblement 2°C tous les 100 m de profondeur), le bâti 21 de l'inclinomètre est choisi dans un matériau résistant à des températures élevées, par exemple dans une gamme allant de 50°C à 250°C.

Dans un exemple préféré de réalisation, afin de minimiser les effets de température, le bâti 21 est réalisé en Pyrex.

Afin de rendre l'inclinomètre 20 solidaire fixement du trou de forage 10, et par conséquent du milieu environnant, un espace 13 compris entre la paroi longitudinale externe 212 du bâti 21 et la paroi longitudinale interne 12 du trou de forage 10 est comblé. Ainsi, les inclinaisons du trou de forage, dues à des déformations du milieu environnant, induisent une inclinaison identique du bâti de l'inclinomètre.

Dans un exemple de réalisation, l'espace 13 est rempli de mortier au ciment.

Dans un autre exemple de réalisation, l'espace 13 est comblé par des particules solides, par exemple des micro-billes, préférentiellement en silice pour résister à la compression et pour résister à des températures élevées.

L'inclinomètre 20 comporte en outre, à l'intérieur du bâti 21, dans une enceinte délimitée par la paroi longitudinale interne 211, un pendule vertical suspendu 22, généralement dénommé pendule simple.

Le pendule 22 comporte une tige flexible 221 dont une première extrémité, dite extrémité supérieure 2211, est solidaire de l'extrémité haute du bâti 21 autour d'un point fixe O.

Par tige flexible, on entend ici une tige qui permet la conservation d'une direction essentiellement verticale, c'est-à-dire selon l'axe Z, lors de l'utilisation du pendule.

La tige 221 du pendule comporte à une extrémité, dite inférieure 2212, opposée à l'extrémité supérieure 2211, une masselotte 222 pour mettre en tension ladite tige. La tige 221 est ainsi sensible à la pesanteur et tend à rester orientée verticalement selon l'axe Z. Grâce à la masselotte 222, la tige 221 forme un pendule librement suspendu au bâti par l'intermédiaire du point fixe O.

Dans un exemple de réalisation, la masselotte 222 du pendule 22 est un cylindre, de diamètre sensiblement inférieur à un diamètre interne du bâti.

De préférence, le pendule 22 présente un axe de symétrie longitudinal 223 sensiblement identique à celui de l'axe de symétrie longitudinal 213 du bâti 21, lorsque le bâti et le trou de forage sont dans la position initiale.

Une déformation du milieu environnant entraîne une variation d'inclinaison du bâti de l'inclinomètre qui induit un déplacement du pendule à l'intérieur du bâti, par rapport à l'axe de symétrie du bâti. La variation angulaire du bâti est répercutée par le mouvement relatif entre le pendule et le bâti.

Ainsi, lorsque le trou de forage 10 est dans la position initiale, c'est à dire verticale, comme illustré sur la figure 1, le pendule 22 est vertical et d'axe 223 parallèle à l'axe de symétrie 11 du trou de forage 10.

Lorsque le trou de forage 10 présente un angle d'inclinaison $\gamma$ suite à une déformation du milieu environnant, comme illustré sur la figure 2, le pendule 22 reste sensiblement vertical et présente un angle $\gamma'$ sensiblement inférieur à $\gamma$ par rapport à l'axe de symétrie longitudinal du bâti 21 et du trou de forage 10.

Le pendule 22 est choisi d'une part dans un matériau suffisamment souple pour se rapprocher d'un pendule dit parfait (correspondant à une masselotte attachée à un fil inextensible de masse négligeable tournant sans frottement dans le vide autour d'un axe fixe), et pour lequel $\gamma' = \gamma$.

Le pendule 22 est choisi d'autre part dans un matériau résistant à des températures élevées, comme pour le bâti 21.

Dans un exemple préféré de réalisation, le pendule 22 (principalement la tige) est réalisé en Pyrex.

Une longueur L de la tige est choisie d'une part de sorte que l'inclinomètre 20 présente une sensibilité angulaire suffisante pour détecter des déformations lentes, en l'occurrence une sensibilité angulaire au moins égale à $10^{-7}$ rad. Comme il sera expliqué dans la suite de la description, la sensibilité angulaire de l'inclinomètre est proportionnelle à la longueur de la tige.

D'autre part, la longueur de la tige est choisie de sorte que l'inclinomètre présente un encombrement et une taille réduite afin de le rendre aisément transportable et maniable.

Dans un exemple de réalisation, la tige présente une longueur sensiblement comprise entre 0,8 m et 1,2 m, de préférence, par exemple égale à 0,87 m.

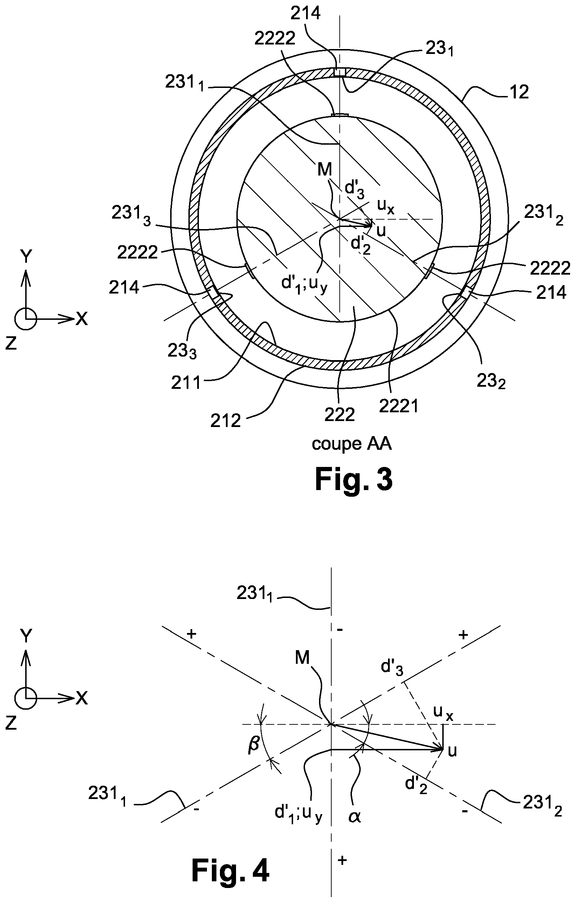

L'inclinomètre comporte en outre, comme illustré sur la figure 3, dans des logements de réception 214 réalisés dans une épaisseur du bâti 21 entre les parois longitudinales interne 211 et externe 212, trois dispositifs de mesure de distance $23_1$, $23_2$, $23_3$. Chaque dispositif de mesure de distance $23_1$, $23_2$, $23_3$ mesure une variation de distance, ou

déplacement, $d_1$, $d_2$, $d_3$, le séparant du pendule 22.

Les trois dispositifs de mesure $23_1$, $23_2$, $23_3$ sont positionnés de telle sorte qu'ils présentent des axes de mesure $231_1$, $231_2$, $231_3$ respectifs coplanaires.

De préférence, les trois axes de mesure $231_1$, $231_2$, $231_3$ respectifs des trois dispositifs de mesure sont situés dans un plan, dit plan de mesure 24, perpendiculairement à un axe dit de référence, correspondant à un axe de symétrie 223 du pendule 22 lorsque le bâti 21 est dans la position initiale, c'est-à-dire correspondant à l'axe de symétrie 213 du bâti 21.

Le plan de mesure 24 est défini par les axes X et Y qui définissent avec l'axe vertical Z le repère orthonormé XYZ.

Avantageusement, les trois axes de mesure $231_1$, $231_2$, $231_3$ sont concourants en un seul et même point.

Dans un mode de réalisation préféré, les trois axes de mesure $231_1$, $231_2$, $231_3$ sont concourants en un point M, point d'intersection du plan de mesure 24 avec l'axe de symétrie 213 du bâti 21.

De préférence, les axes de mesure $231_1$, $231_2$, $231_3$ des dispositifs de mesure $23_1$, $23_2$, $23_3$ sont non colinéaires deux à deux.

Dans un exemple préféré, illustré par la figure 3, les trois dispositifs de mesure $23_1$, $23_2$, $23_3$ sont répartis sur le bâti 21 de manière angulairement équidistante les uns des autres de 120°.

Dans un exemple de réalisation préféré, chaque dispositif de mesure $23_1$, $23_2$, $23_3$ est disposé de sorte à mesurer le déplacement entre une face externe 2221 et la masselotte 222.

Les trois dispositifs de mesure de distance $23_1$, $23_2$, $23_3$ permettent de mesurer à tout instant un déplacement u de la masselotte du pendule, dans le plan de mesure défini par les axes XY, à partir d'une position de référence, lorsque le bâti et le trou de forage sont dans la position initiale.

Un déplacement u du pendule 22 dans le plan de mesure 24, dû à une déformation du milieu environnant, est très faible par rapport à la longueur L du pendule 22. Les dispositifs de mesure $23_1$, $23_2$, $23_3$ sont donc choisis de sorte à pouvoir mesurer des déplacements très faibles, en l'occurrence de l'ordre d'au moins $10^{-9}$m.

En effet, il est connu de l'homme du métier que, dans le cas d'un pendule parfait, la sensibilité angulaire de l'inclinomètre est proportionnelle à la longueur L du pendule (équivalente à la longueur de la tige). La mesure d'un déplacement u du pendule dans le plan de mesure 24 permet de mesurer une variation angulaire égale à $\dfrac{u}{L}$ . Dans le cas d'un pendule réel présentant ayant une certaine rigidité, on mesure un déplacement $u'= Ru$ où R est un coefficient fonction d'un coefficient de flexibilité de la tige, R étant généralement inférieur à 1. Dans ce cas, la sensibilité angulaire S de l'inclinomètre est égale à $S = L.R$ . Un étalonnage de l'inclinomètre permet de calculer précisément la constante R.

Dans un exemple de calcul, pour un pendule de longueur L=1 m et proche d'un comportement idéal, c'est-à-dire un coefficient R proche de 1, la sensibilité angulaire de l'inclinomètre sera proche de 1. Ainsi, la mesure d'un déplacement du pendule 22 dans le plan de mesure 24 de 0,1 $\mu$m correspondra donc à une variation d'inclinaison de $10^{-7}$ rad et la mesure d'un déplacement du pendule 22 dans le plan de mesure 24 de 1 nm correspondra à une variation d'inclinaison de $10^{-9}$ rad.

Des dispositifs de mesure actuels étant capables de mesurer $10^{-9}$ m, la sensibilité angulaire de l'inclinomètre peut atteindre $10^{-9}$ rad.

Chaque dispositif de mesure $23_1$, $23_2$, $23_3$ comporte (non représenté sur les figures):

- une fibre optique, dite fibre de mesure, pour transporter et guider le faisceau lumineux d'une source lumineuse de longueur d'onde centrale $\lambda_0$, de préférence d'une source lumineuse laser, vers la masselotte 222, une extrémité de ladite fibre de mesure, fixée sur le bâti et placée en regard de la masselotte, formant avec la face externe 2221 de la masselotte 222 une cavité optique de Fabry-Pérot,
- un moyen de détection d'un signal interférométrique, ledit signal interférométrique comportant l'information sur le déplacement de la masselotte du pendule par rapport à l'extrémité de la fibre de mesure, et étant généré par une interférence entre un faisceau lumineux de référence et un faisceau de mesure, ledit faisceau lumineux de référence correspondant à une fraction du faisceau lumineux issu de la source lumineuse qui est réfléchie par l'extrémité de la fibre, et ledit faisceau lumineux de mesure correspondant à une fraction du faisceau lumineux issu de la source lumineuse qui est réfléchie par la masselotte 222 et qui parcourt un trajet optique dans la cavité de Fabry-Pérot dont la variation est fonction de la distance à déterminer.

La masselotte 222 comporte, de préférence, au niveau de sa face externe 2221, en vis-à-vis de chaque extrémité de fibre, un miroir 2222, d'axe longitudinal sensiblement parallèle à l'axe de symétrie 213 du bâti 21, de sorte à réfléchir de manière maximale le faisceau lumineux de mesure. Selon l'invention, pour compenser de faibles variations de longueur d'onde entre sources lumineuses, les trois dispositifs de mesure présentent une source lumineuse commune. Le faisceau issu de la source lumineuse commune est scindé, via un coupleur 1*3 voies, en trois faisceaux, chaque faisceau se propageant, via une fibre, vers un coupleur puis vers une fibre de mesure et une cavité optique Fabry-Pérot formée par l'extrémité de la fibre de mesure et un miroir.

Le système de mesure d'une variation d'inclinaison comporte en outre des moyens de détermination (non représenté) de la variation d'inclinaison du bâti, et par conséquent du trou de forage, à partir des signaux interférométriques mesurés par les moyens de détection des dispositifs de mesure.

Principe de mesure de l'inclinaison

La masselotte 222 du pendule 22 se déplace sur une sphère qui peut être assimilée à un plan, le plan de mesure 24, pour de petites oscillations. Le pendule 22 effectuant un mouvement dans le plan de mesure 24, la mesure de deux déplacements le long de deux directions non colinéaires entre le bâti et la masselotte permet de calculer le déplacement de la masselotte dans le plan de mesure. Trois mesures de déplacements $d_1$, $d_2$, $d_3$ selon trois axes (dans le même plan de mesure), par exemple à 120°, permettent d'obtenir des informations supplémentaires par rapport à la mesure de deux déplacements, telles que par exemple une détermination des variations d'origine physique commune des déplacements mesurés, une détermination des composantes du déplacement du pendule, ou encore une estimation de la précision du positionnement du pendule en X et Y.

Les déplacements $d_1$, $d_2$, $d_3$ mesurés correspondent aux variations de distance mesurées entre la face externe 2221 de la masselotte 222 du pendule 22 et les dispositifs de mesure $23_1$, $23_2$, $23_3$ solidaires du bâti 21.

Une variation de distance correspond à la différence entre une distance mesurée par le dispositif de mesure et une distance, dite de référence, mesurée lorsque dans le pendule est dans la position de référence.

Dans la suite de la description, le déplacement $d_1$, respectivement $d_2$, $d_3$, est compté positif lorsque la distance entre le bâti et la masselotte augmente, donc une variation de distance positive, et est compté négatif lorsque la distance entre le bâti et la masselotte diminue, donc une variation de distance négative.

En fait, les déplacements mesurés $d_1$, $d_2$, $d_3$ par les dispositifs de mesure $23_1$, $23_2$, $23_3$ sont fonction de variations ayant une origine physique commune (dues à une dérive du système de mesure au cours du temps). Dans un exemple de cas réel, ces variations peuvent résulter par exemple d'une dilatation thermique du système de mesure, ou d'une variation de longueur d'onde des dispositifs de mesure $23_1$, $23_2$, $23_3$, lorsque ce sont des dispositifs optiques. Ces variations communes du système de mesure correspondent à un même déplacement apparent, noté C, sur les 3 axes de mesures. Des mesures réduites $d'_1$, $d'_2$, $d'_3$, correspondant à ce qui serait mesuré en l'absence de cette variation commune aux trois mesures, et donc correspondant au déplacement réel de la masselotte du pendule, sont donc telles que $d'_i = d_i - C$.

Soit $u_x$ et $u_y$ les composantes du déplacement u recherché de la masselotte 222 du pendule 22 selon les axes X et Y dans le plan de mesure 24.

Par convention, l'axe de mesure d'un des trois dispositifs de mesure est dans l'axe Y. Dans l'exemple décrit à la figure 3, l'axe de mesure $231_1$ du dispositif 231 est dans l'axe Y.

Si l'on considère des positionnements relatifs quelconques des dispositifs de mesure entre eux sur le bâti, comme par exemple illustré sur les figures 3 et 4, les relations entre ces composantes $u_x$, $u_y$, du déplacement u du pendule et les déplacements mesurés $d_1$, $d_2$, $d_3$ s'écrivent :

$$-u_y = d_1 - C$$
$$-\cos\alpha \cdot u_x + \sin\alpha \cdot u_y = d_2 - C \qquad (1)$$
$$+\cos\beta \cdot u_x + \sin\beta \cdot u_y = d_3 - C$$

où $\alpha$ correspond à l'angle formé entre l'axe de mesure $231_2$ du dispositif de mesure $23_2$ et l'axe X et $\beta$ correspond l'axe de mesure $231_3$ du dispositif de mesure $23_3$ et l'axe X.

Il est alors possible de calculer les expressions des composantes $u_x$ et $u_y$ du déplacement u du pendule.

Trois expressions sont possibles pour déterminer la composante $u_x$ :

$$u_{x,1} = -\frac{d_2 - C + (d_1 - C) \cdot \sin \alpha}{\cos \beta}$$

$$u_{x,2} = \frac{d_3 - C + (d_1 - C) \cdot \sin \beta}{\cos \beta} \qquad (2a)$$

$$u_{x,3} = \frac{(d_3 - C) \cdot \sin \alpha - (d_2 - C) \cdot \sin \beta}{\sin \alpha \cdot \cos \beta + \sin \beta \cdot \cos \alpha}$$

Deux expressions sont possibles pour déterminer la composante $u_y$ :

$$u_{y,1} = -(d_1 - C)$$

$$u_{y,2} = \frac{(d_3 - C) \cdot \cos \alpha + (d_2 - C) \cdot \cos \beta}{\sin \alpha \cdot \cos \beta + \sin \beta \cdot \cos \alpha} \qquad (2b)$$

Préalablement au calcul des composantes $u_x$ et $u_y$, il est nécessaire de calculer les paramètres $\alpha$, $\beta$ et C :

- Les angles $\alpha$ et $\beta$ sont considérés comme des constantes du système de mesure et sont déterminables par exemple par étalonnage,
- sur un intervalle de temps suffisamment petit, par exemple de l'ordre d'une dizaine de secondes, le terme C est considéré comme lentement variable, par exemple de l'ordre de 10nm par heure, et peut être assimilé à un terme constant.

La redondance des données mesurées (au nombre de trois : les déplacements $d_1$, $d_2$, $d_3$) par rapport aux inconnues (au nombre de deux : les composantes $u_x$ et $u_y$) confère au système de mesure des propriétés particulières qui permettent son étalonnage, c'est à dire le calcul de $\alpha$ et $\beta$, et le calcul de l'évolution temporelle du déplacement apparent C.

a) Etalonnage du système de mesure

Dans un mode de réalisation, afin de déterminer les valeurs exactes de $\alpha$ et $\beta$, on considère un échantillon de données mesurées sur un intervalle de temps déterminé. Dans un exemple pratique de réalisation, cet intervalle est de l'ordre d'une dizaine de secondes, et les déplacements mesurés $d_1$, $d_2$, $d_3$ sont enregistrés toutes les 0.01 seconde. Sur cet intervalle, le déplacement apparent C est choisi de telle sorte que la somme des déplacements réduits

$$\sum_{i=1}^{3} d'_i = \sum_{i=1}^{3} (d_i - C)$$ soit nulle en valeur moyenne durant cet intervalle de temps. On observe alors, en fonction des

valeurs des angles $\alpha$ et $\beta$, une dispersion entre les trois valeurs de la composante $u_x$ données à partir des trois expressions de (2a). De même, une dispersion entre les deux valeurs de la composante $u_y$ données à partir des deux expressions de (2b), apparaît. Il est alors possible de trouver les valeurs des angles $\alpha$ et $\beta$ qui conduisent à une valeur minimale des écarts quadratiques moyens $e_x$ et $e_y$ associé à un vecteur u. En posant pour les valeurs moyennes du déplacement

$$\overline{u}_x = \frac{1}{n} \sum_{j=1}^{n} u_{x,j}$$ (avec n=3) et $$\overline{u}_y = \frac{1}{n} \sum_{j=1}^{n} u_{y,j}$$ (avec n=2), on obtient pour les écarts quadratiques moyens

$$e_x = \sqrt{\frac{1}{n} \sum_{j=1}^{n} (u_{x,j} - \overline{u}_x)^2}$$ (avec n=3) et $$e_y = \sqrt{\frac{1}{n} \sum_{j=1}^{n} (u_{y,j} - \overline{u}_y)^2}$$ (avec n=2).

En appliquant cette méthode sur des échantillons de données successifs, il est possible de calculer très précisément les valeurs optimales des angles $\alpha$ et $\beta$.

b) détermination du déplacement apparent C

Dans un mode de réalisation, on considère à présent les équations 2a et 2b avec les valeurs optimales des angles $\alpha$ et $\beta$ obtenues par exemple comme ci-dessus. Il est aisé de montrer que la variation de C modifie la dispersion des valeurs des composantes $u_x$ et $u_y$. En utilisant un échantillon de données comme précédemment, il est possible de trouver la valeur optimale de C qui minimise les écarts quadratiques moyens associé au vecteur u.

c) détermination des composantes du déplacement

Une fois les angles $\alpha$ et $\beta$ connus, ainsi que la valeur de C pour chaque intervalle de temps, il est possible de calculer précisément les composantes $u_x$ et $u_y$ du déplacement u du pendule dans le plan de mesure, corrigées des variations communes du système de mesure, en utilisant la valeur moyenne des expressions (2a) et (2b).

d) estimation de la précision intrinsèque du positionnement du pendule en X et en Y

Les écarts quadratiques moyens $e_x$ et $e_y$ associés aux valeurs des composantes $u_x$ et $u_y$ obtenus en utilisant les équations (2a) et (2b), pour des valeurs $\alpha$, $\beta$ et C préalablement déterminées, permettent de calculer la précision intrinsèque du positionnement de la masselotte du pendule en X et en Y.

Dans l'exemple particulier de réalisation où les axes de mesure des dispositifs de mesure $23_1$, $23_2$, $23_3$, forment entre eux un angle sensiblement égal à 120°, c'est-à-dire que le système de mesure est symétrique, les angles $\alpha$ et $\beta$ sont égaux à 30°.

Dans ce cas, les relations entre les composantes $u_x$, $u_y$, du déplacement u et les déplacements mesurés $d_1$, $d_2$, $d_3$ sont données par le produit scalaire entre (ux, uy) et les vecteurs directeurs des axes optiques qui sont (0,-1), (-cos 30°, sin 30°), (cos 30°, sin 30°) pour les axes $231_1$, $231_2$, $231_3$ respectivement.

On en déduit les équations suivantes :

$$-u_y = d_1 - C$$
$$-u_x \cdot \cos 30 + u_y \cdot \sin 30 = d_2 - C \qquad (3)$$
$$u_x \cdot \cos 30 + u_y \cdot \sin 30 = d_3 - C$$

A partir de ces trois équations, il est possible de déterminer les composantes $u_x$ et $u_y$.

Trois expressions sont possibles pour déterminer la composante $u_x$ :

$$u_x = -\frac{(d_2 - C) + (d_1 - C) \cdot \sin 30}{\cos 30}$$
$$u_x = \frac{(d_3 - C) + (d_1 - C) \cdot \sin 30}{\cos 30} \qquad (4a)$$
$$u_x = \frac{d_3 - d_2}{2 \cos 30}$$

Deux expressions sont possibles pour déterminer la composante $u_y$ :

$$u_y = -(d_1 - C)$$
$$u_y = d_2 + d_3 - 2C \qquad (4b)$$

Les écarts entre les valeurs obtenues pour les composantes $u_x$ et $u_y$ en utilisant les équations (4a) et (4b) permettent toujours de déterminer la précision intrinsèque du positionnement du pendule en X et en Y.

La compensation des dérives du système de mesure, via la mesure du déplacement apparent C, est également possible.

Il est intéressant de noter que, lorsque le système de mesure est symétrique, ledit système de mesure possède un déplacement invariant $\bar{d}=d_1+d_2+d_3$ égal à 3C, ce qui permet une mesure directe du déplacement apparent C, et donc des dérives du système de mesure pour une série de données. Dans ce cas, en posant sin(30°) = 0,5 et

$$\cos(30°) = \frac{\sqrt{3}}{2},$$ les composantes $u_x$ et $u_y$ du déplacement u du pendule s'expriment de façon unique :

$$u_x = \frac{1}{\sqrt{3}}(d_3 - d_2)$$
$$u_y = -(d_1 - C)$$

$$(5)$$

Les dispositifs de mesure sont avantageusement au nombre de trois, comme illustré sur la figure 3. Bien que les dispositifs de mesure soient illustrés sur la figure 3 et décrits au nombre de trois, le nombre de ces dispositifs de mesure n'est pas limité à celui décrit et illustré. Ainsi, il est possible, sans se départir du cadre de l'invention, de réaliser un système de mesure comportant plus de trois dispositifs de mesure et présentant les mêmes avantages (détermination du déplacement apparent et des composantes du déplacement du pendule, estimation de la précision du positionnement du pendule en X et Y) que pour un système de mesure à trois dispositifs de mesure. Un nombre de dispositifs de mesure au-delà de trois permet avantageusement d'obtenir une redondance plus importante des mesures obtenues. Les calculs pour retrouver le déplacement du pendule dans le plan de mesure sont à la portée de l'homme du métier.

La description ci-avant illustre clairement que par ses différentes caractéristiques et leurs avantages, la présente invention atteint les objectifs qu'elle s'était fixée. En particulier, elle fournit un système de mesure qui permet de s'affranchir des déformations propres au système de mesure et à sa dérive. L'inclinomètre présente une taille réduite afin qu'il soit aisément transportable et d'utilisation facile, d'où la possibilité d'une utilisation en forage à différentes profondeurs. Il est avantageusement réalisé en un matériau résistant à la chaleur, de façon à présenter une durée de vie importante. Ce critère est particulièrement important car le système de mesure est amené à mesurer les variations d'inclinaison d'une structure sur une période s'étendant sur plusieurs années.

Les matériaux le constituant lui permettent de résister à la chaleur. Du fait de la dérive compensée du système de mesure suivant l'invention, le système de mesure permet un suivi sur le long terme, par exemple sur une période s'étendant sur plusieurs jours, mois et/ou années.

Le déploiement de plusieurs systèmes de mesure au voisinage d'une faille permet avantageusement de détecter de façon fiable de petits mouvements lents en profondeur.

L'invention est décrite dans le cas d'une application sismologique. L'invention est également applicable à la surveillance de sites de stockage géologique. En effet, certains systèmes géologiques perméables recouverts de formations étanches permettent de stocker des fluides tels que par exemple le dioxyde de carbone, le gaz naturel ou encore l'eau. En réponse à ce stockage, le système géologique se déforme faiblement. La mesure de ces déformations à l'aide d'inclinomètres selon l'invention installés dans des forages permet de suivre l'évolution du stockage et la migration des fluides dans la couche perméable. Du fait de la dérive compensée du système de mesure suivant l'invention, le système de mesure permet un suivi du stockage sur le long terme, par exemple sur une période s'étendant sur plusieurs jours, mois et/ou années. La mise en oeuvre de système de mesure dans cette application est du ressort de l'homme du métier.

## Revendications

1. Inclinomètre (20) pour la mesure d'une variation d'inclinaison d'une structure depuis une position initiale donnée, comportant :

   - un bâti (21) destiné à être rendu rigidement solidaire de la structure afin que l'inclinaison du bâti varie identiquement à la structure, et
   - un pendule (22) librement suspendu au bâti, comportant une première extrémité (2211) fixée au bâti (21) et une extrémité opposée (2212) libre en mouvement,

   l'inclinomètre (20) comportant, au niveau du bâti (21), au moins trois dispositifs ($23_1$, $23_2$, $23_3$) de mesure de distance présentant des axes de mesure respectifs ($231_1$, $231_2$, $231_3$) coplanaires et concourants en un seul et même point, chaque dispositif de mesure mesurant une variation de distance le séparant du pendule,

**caractérisé en ce que** les dispositifs de mesure de distance ($23_1$, $23_2$, $23_3$) sont des dispositifs à fibres optiques couplés à une source lumineuse commune.

2. Inclinomètre selon la revendication 1 **caractérisé en ce que** le plan, dit de mesure (24), dans lequel sont situés les axes de mesure ($231_1$, $231_2$, $231_3$) des dispositifs de mesure ($23_1$, $23_2$, $23_3$) est un plan perpendiculaire à un axe, dit de référence, correspondant à un axe de symétrie (223) du pendule lorsque le bâti (21) est dans la position initiale.

3. Inclinomètre selon l'unes des revendications précédentes **caractérisé en ce que** les dispositifs de mesure de distance ($23_1$, $23_2$, $23_3$) sont disposés sensiblement au niveau de l'extrémité libre (2212) du pendule.

4. Inclinomètre selon l'une des revendications précédentes **caractérisé en ce que** les axes de mesure respectifs ($231_1$, $231_2$, $231_3$) coplanaires sont non colinéaires deux à deux.

5. Inclinomètre selon l'une des revendications précédentes comportant trois dispositifs de mesure ($23_1$, $23_2$, $23_3$) présentant trois axes de mesure respectifs ($231_1$, $231_2$, $231_3$) coplanaires formant entre eux un angle sensiblement égal à 120°.

6. Système de mesure comportant un inclinomètre (20) conforme à l'une des revendications 1 à 5 et des moyens de détermination de la variation d'inclinaison du bâti (21) à partir des valeurs relevées par les dispositifs de mesure de distance ($23_1$, $23_2$, $23_3$).

7. Utilisation du système de mesure conforme à la revendication 6 pour la mesure de déformations géophysiques.

**Patentansprüche**

1. Neigungsmesser (20) zum Messen einer Neigungsänderung einer Struktur ausgehend von einer gegebenen Ausgangsposition, umfassend:

   - einen Rahmen (21), der dazu dient, starr mit der Struktur verbunden zu werden, damit sich die Neigung des Rahmens genauso ändert wie die der Struktur, und
   - ein frei am Rahmen aufgehängtes Pendel (22) mit einem ersten Ende (2211), das am Rahmen (21) befestigt ist, und einem entgegengesetzten Ende (2212), das frei beweglich ist,

   wobei der Neigungsmesser (20) auf Ebene des Rahmens (21) mindestens drei Vorrichtungen ($23_1$, $23_2$, $23_3$) zur Abstandsmessung aufweist, die jeweilige Messachsen ($231_1$, $231_2$, $231_3$) aufweisen, die komplanar sind und in ein und demselben Punkt zusammenlaufen, wobei jede Messvorrichtung eine Änderung des sie vom Pendel trennenden Abstands misst, **dadurch gekennzeichnet, dass** die Abstandsmessvorrichtungen ($23_1$, $23_2$, $23_3$) Vorrichtungen mit optischen Fasern sind, die mit einer gemeinsamen Lichtquelle gekoppelt sind.

2. Neigungsmesser nach Anspruch 1, **dadurch gekennzeichnet, dass** die Ebene, Messebene (24) genannt, in der die Messachsen ($231_1$, $231_2$, $231_3$) der Messvorrichtungen ($23_1$, $23_2$, $23_3$) liegen, eine Ebene senkrecht zu einer Achse, Referenzachse genannt, ist, die einer Symmetrieachse (223) des Pendels entspricht, wenn der Rahmen (21) in der Ausgangsposition ist.

3. Neigungsmesser nach einem der vorhergehenden Ansprüche, **dadurch gekennzeichnet, dass** die Abstandsmessvorrichtungen ($23_1$, $23_2$, $23_3$) im Wesentlichen am freien Ende (2212) des Pendels angeordnet sind.

4. Neigungsmesser nach einem der vorhergehenden Ansprüche, **dadurch gekennzeichnet, dass** die jeweiligen komplanaren Messachsen ($231_1$, $231_2$, $231_3$) nicht paarweise kollinear sind.

5. Neigungsmesser nach einem der vorhergehenden Ansprüche mit drei Messvorrichtungen ($23_1$, $23_2$, $23_3$), die drei jeweilige komplanare Messachsen ($231_1$, $231_2$, $231_3$) aufweisen, die untereinander einen Winkel von im Wesentlichen gleich 120° bilden.

6. Messsystem mit einem Neigungsmesser (20) nach einem der Ansprüche 1 bis 5 und Mitteln zum Bestimmen der Neigungsänderung des Rahmens (21) anhand der Werte, die von den Abstandsmessvorrichtungen ($23_1$, $23_2$, $23_3$)

erfasst werden.

**7.** Verwendung des Messsystems nach Anspruch 6 zum Messen von geophysikalischen Verformungen.

**Claims**

**1.** Inclinometer (20) for the measurement of a variation in inclination of a structure from a given initial position, comprising:

- a framework (21) intended to be secured rigidly to the structure so that the inclination of the framework varies identically to the structure, and
- a pendulum (22) suspended freely from the framework, comprising a first end (2211) fixed to the framework (21) and an opposite end (2212) which is free to move,

the inclinometer (20) comprising, at the level of the framework (21), at least three distance measurement devices ($23_1$, $23_2$, $23_3$) exhibiting respective measurement axes ($231_1$, $231_2$, $231_3$) which are coplanar and concurrent at one and the same point, each measurement device measuring a variation in distance separating it from the pendulum, **characterized in that** the distance measurement devices ($23_1$, $23_2$, $23_3$) are fiber optic devices coupled to a common luminous source.

**2.** Inclinometer according to Claim 1, **characterized in that** the so-called measurement plane (24), in which the measurement axes ($231_1$, $231_2$, $231_3$) of the measurement devices ($23_1$, $23_2$, $23_3$) are situated, is a plane perpendicular to a so-called reference axis corresponding to an axis of symmetry (223) of the pendulum when the framework (21) is in the initial position.

**3.** Inclinometer according to either of the preceding claims, **characterized in that** the distance measurement devices ($23_1$, $23_2$, $23_3$) are disposed substantially at the level of the free end (2212) of the pendulum.

**4.** Inclinometer according to one of the preceding claims, **characterized in that** the coplanar respective measurement axes ($231_1$, $231_2$, $231_3$) are not pairwise collinear.

**5.** Inclinometer according to one of the preceding claims, comprising three measurement devices ($23_1$, $23_2$, $23_3$) exhibiting three coplanar respective measurement axes ($231_1$, $231_2$, $231_3$) forming between themselves an angle substantially equal to 120°.

**6.** Measurement system comprising an inclinometer (20) according to one of Claims 1 to 5 and means for determining the variation in inclination of the framework (21) on the basis of the values logged by the distance measurement devices ($23_1$, $23_2$, $23_3$).

**7.** Use of the measurement system according to Claim 6 for the measurement of geophysical deformations.

**Fig. 1**

**Fig. 2**

coupe AA

**Fig. 3**

**Fig. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4949467 A
- US 20050007125 A1
- WO 9010193 A